# EUROPÄISCHE PATENTSCHRIFT

(11) **EP 0 446 681 B1**
(45) Veröffentlichungstag und Bekanntmachung des Hinweises auf die Patenterteilung: **19.01.1994**
(21) Anmeldenummer: 91102488.3
(22) Anmeldetag: 21.02.1991
(51) Int. Cl.: A01D 34/10, F16F 15/06

(54) **Schwingungsdämpfungsvorrichtung für vertikale Schwingungen**
Vibration damping arrangement for vertical oscillations
Dispositif amortisseur de vibrations pour oscillations verticales

(30) Priorität: 13.03.1990 DE 4007919
(43) Veröffentlichungstag der Anmeldung: 18.09.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Eckert, Rainer, Dipl.-Ing., W-7140 Ludwigsburg (DE)

(56) Entgegenhaltungen:
- EP-A- 0 284 659
- EP-A- 0 294 842
- DD-A- 251 270
- DE-A- 3 503 938
- DE-A- 3 629 811
- FR-A- 2 403 739

## Beschreibung

Die Erfindung betrifft eine Vorrichtung mit einem Arbeitsgerät und einer Schwingungsdämpfungsvorrichtung zur Dämpfung von am Griffholmen eines handgeführten, einachsigen und von einem Verbrennungsmotor angetriebenen Arbeitsgerätes, wie z.B. eines Schleppers, Balkenmähers, Schneeräumers oder dgl., auftretenden vertikalen Schwingungen, welche Griffholmen aufweist die in Form einer Schwinge ausgebildet oder mit einer Schwinge verbunden ist, die über ein Gelenk und ein Verbindungselement am Arbeitsgerät befestigt ist, und bei der die Schwinge über mindestens ein Federelement am Arbeitsgerät abgestützt ist. Solch eine Vorrichtung ist aus der DE-A-3 629 811 bekannt.

Beim Arbeiten mit diesen Geräten treten bedingt durch den Verbrennungsmotor starke Schwingungen auf, welche über den Griffholm auf die Arbeitsperson übertragen werden. Die Schwingungen werden von den Massenkräften des Kolbens und den Explosionskräften bei der Verbrennung des Kraftstoff-Luft-Gemischs im Zylinder erzeugt. Die Richtung dieser Schwingungen ist mit der Zylinderachse identisch und verläuft in der Regel in Vertikalrichtung.

Die Schwingungen können je nach Größe und Bauart des Verbrennungsmotors Werte bis zu 120 m/s² erreichen. Diese Schwingungen führen je nach Größe und Dauer der Arbeitszeit zur akuten oder chronischen Schädigung der Gesundheit der Arbeitsperson. Diese Schädigungen können sich z.B. in Durchblutungsstörungen, Muskelschwäche und Knochenabsplitterungen äußern und zur Invalidität der Arbeitsperson führen. Um solche Schädigungen zu verhindern, sind je nach Stärke der Schwingungen häufigere Arbeitspausen einzulegen, welche die Produktivität beim Arbeiten mit solchen Geräten verringern und die Arbeitskosten erhöhen.

Zusätzlich treten beim Arbeiten mit Geräten der o.g. Klasse noch weitere Schwingungen in Vertikalrichtung auf, die beim Überfahren von Bodenunebenheiten entstehen.

Bisherige Lösungen zur Schwingungsdämpfung des Griffholms sind in den meisten Fallen durch Lagerung des Griffholms an einem einzigen Punkt am Rahmen oder Chassis des Gerätes gekennzeichnet. Hierbei kommen Gummipuffer oder Gummibuchsen als schwingungsisolierende Verbindungslemente zwischen Rahmen bzw. Chassis des Gerätes und Griffholm zum Einsatz.

Hauptnachteil dieser Lagerungen ist, daß diese nicht so elastisch ausgeführt werden kann, wie dies für eine optimale Dämpfung der Vertikelschwingungen nötig ist. Dies liegt vor allem daran, daß ein schwingungsgedämpft gelagerter Griffholm trotz einer Schwingungsisolierung noch über eine ausreichende Eigenstabilität verfügen muß, und daß die Arbeitsperson in bestimmten Arbeitssituationen über den Griffholm Lenk- und Führungskräfte auf das Arbeitsgerät einleiten muß. Dies führt dazu, daß bei einer zu elastischen Lagerung des Griffholms die Führungsstabilität des Gerätes verloren geht und deshalb entsprechend steifere Isolierungselemente verwendet werden müssen, welche dann keine ausreichende Dämpfung der auftretenden Schwingungen ermöglichen.

Um zu erreichen, daß einerseits eine gute Führungsfähigkeit der Maschine sowohl in deren Fahrtrichtung als auch bei deren horizontalen Querbewegungen erhalten bleibt, andererseits aber auch die durch den Motor und das von ihm angetriebene Werkzeug hervorgerufenen Vibrationen nur gedämpft auf die von der Bedienperson zu handhabende Holmenanordnung gelangen, ist es bekannt, bei einer handgeführten, selbstfahrenden Maschine für die Bodenbearbeitung die Holmenanordnung über eine Gelenkverbindung am Maschinenrahmen zu befestigen, wobei die Gelenkachse der Gelenkverbindung sich im wesentlichen in Längsrichtung der Maschine erstreckt und wobei neben der Gelenkverbindung einerseits an der Holmenanordnung und andererseits am Maschinenrahmen angreifende Dämpfungsmittel vorgesehen sind (DE 36 29 811A1).

Mit den getroffenen Maßnahmen ist es zwar möglich, die Vibrationen zu dämpfen, die sowohl eine vertikale als auch eine horizontale Komponente aufweisen, allein vertikal wirkende Kräfte werden jedoch hierbei im wesentlichen ungedämpft übertragen.

Aufgabe der Erfindung ist es daher, eine Schwingungsdämpfungsvorrichtung anzugeben, die die vertikalen Schwingungen der eingangs beschriebenen Arbeitsgeräte noch besser dämpft und die es zugleich ermöglicht, daß die Lenk- und Führungskräfte auf das Arbeitsgebiet ungehindert übergeleitet werden können.

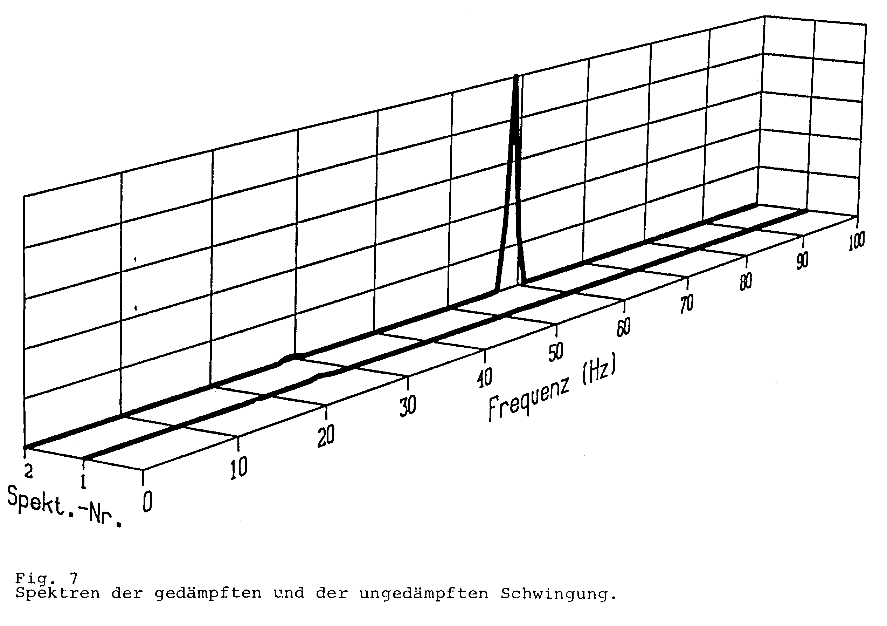

Diese Aufgabe wird mit den Merkmalen des Anspruchs 1 gelöst. Erfindungsgemäß ist das Gelenk 3 derart angeordnet, daß desen Gelenkachse in einer horizontalen Ebene und quer zur Längsachse des Arbeitsgerätes 1 liegt. Dabei wird erreicht, daß die durch das Arbeitsgerät 1 erzeugten vertikalen Schwingungen durch das System besser abgefangen werden. Wie in Figur 7 gezeigt, kann somit eine fast vollständige Dämpfung der vertikalen Schwingungen erreicht werden. Die Vorteile der erfindungsgemäßen Lösung gegenüber dem Stand der Technik sind deshalb ganz entscheidend im Hinblick auf die Bedienung der Maschine durch die Arbeitsperson.Der Arbeitsperson wird dadurch ein völlig problemloses Bedienen der Maschine ermöglicht. Die eingangs geschilderten Probleme in Bezug auf gesundheitliche Schäden sowie auf die Auswirkung der Arbeitsproduktivität sind damit beseitigt.

Eine bevorzugte Ausführungsform der Erfindung ist dadurch gekennzeichnet, daß die Schwinge über zwei Gelenke 3 mit zwei starren Verbindungselementen 4 am Chassis des Gerätes 1 befestigt ist. Die für die jeweilige Arbeitsmaschine (Balkenmäher, Schneeräumer etc.) erforderliche Anordnung der Verbindungselemente 4 richtet sich nach deren Gegebenheiten. Hierbei ist dann erforderlich, daß zwischen den Schwingen 2 ein Befestigungssteg 10 vorgesehen ist.

Bei einer weiteren bevorzugten Ausführungsform ist zwischen den beiden Gelenken 3 eine Schwingenachse 7 vorgesehen. Durch diese vorteilhafte Ausgestaltung wird die Stabilität des Gesamtsystems erhöht und die Überleitung der Lenk- und Führungskräfte nochmals verbessert.

Gemäß den Merkmalen des Anspruches 4 ist es vorteilhaft, daß die Schwingenachse 7 über elastische Lager 12 mit der Schwinge 2 verbunden ist. Dadurch wird eine zusätzliche Dämpfung erreicht.

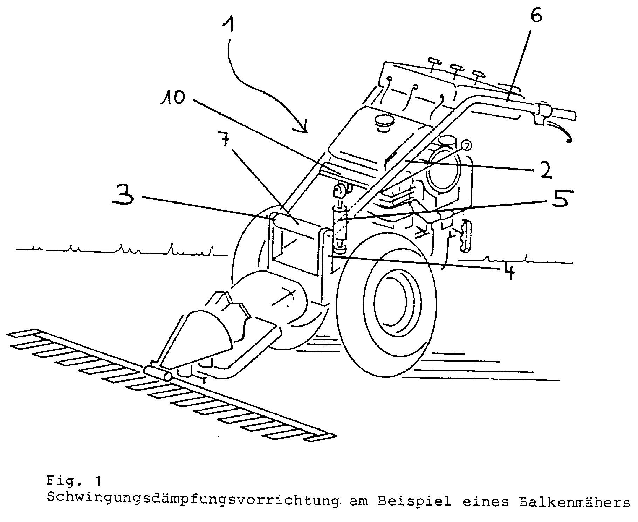

Eine Ausführungsform sieht zwei Federelemente 5 vor. Diese Federelemente 5 dienen zur Abstützung der Schwinge 2 gegenüber dem Chassis auf beiden Seiten des Motors des Arbeitsgerätes 1. Es ist aber genauso möglich, lediglich eine Feder in der Mitte anzuordnen (Fig. 1) oder mehr als zwei Federn zu verwenden.

Als Federelemente 5 können alle gängigen Federn wie Schraubenfedern 9 oder Gasdruckdämpfer 8 eingesetzt werden. Die Erfindung ist aber nicht auf diese bevorzugten Elemente beschränkt.

Gemäß einer weiter bevorzugten Ausführungsform (Anspruch 6) ist vorgesehen, daß das Gasdruckfederbein 8 mit einer arretierbaren Mittelstellung versehen ist. Dadurch ist es möglich, den gesamten Griffholm auf die Höhe der jeweiligen Arbeitsperson einzustellen. Dadurch wird also erreicht, daß sowohl kleine wie auch große Bedienpersonen die jeweils günstigste Stellung für den Griffholm auswählen können. Diese vorteilhafte Ausgestaltung verbindet somit die Schwingungsdämpfung mit einer günstigen Griffstellung und verbessert nochmals die Bedienung des Arbeitsgerätes.

In den nachfolgenden Figuren sind Ausführungsbeispiele der Erfindung dargestellt.

Es zeigen
Fig. 1 eine perspektivische Darstellung eines Arbeitsgerätes in Form eines Balkenmähers, wobei der Griffholm als Schwinge ausgebildet ist;
Fig. 2 eine Schwingungsdämpfungsvorrichtung, wobei der Griffholm als Schwinge ausgebildet ist mit den entsprechenden Federelementen und einer Schwingenachse;
Fig. 3: Hier ist ebenfalls der Griffholm als Schwinge ausgebildet; es wird aber nur 1 Federelement verwendet.
Fig. 4 eine Schwingungsdämpfungsvorrichtung, wobei der Griffholm mit einer Schwinge verbunden ist und die entsprechenden Federelemente;
Fig. 5 zeigt verschiedene Federelemente für die Schwingenlagerung;
Fig. 6 eine elastische Lagerung der Schwingenachse;
Fig. 7 zeigt die Meßergebnisse einer erfindungsgemäßen Schwingungsdämpfungsvorrichtung im Vergleich zu einer ungedämpften Arbeitsmaschine.

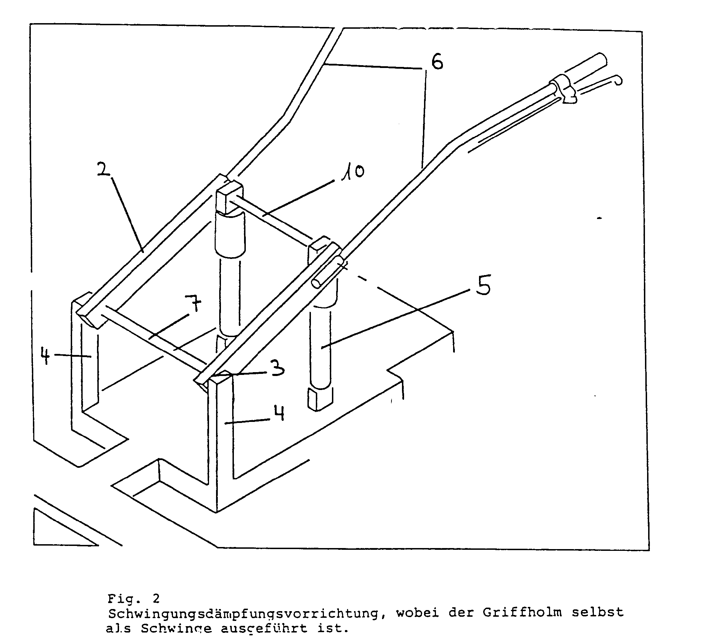

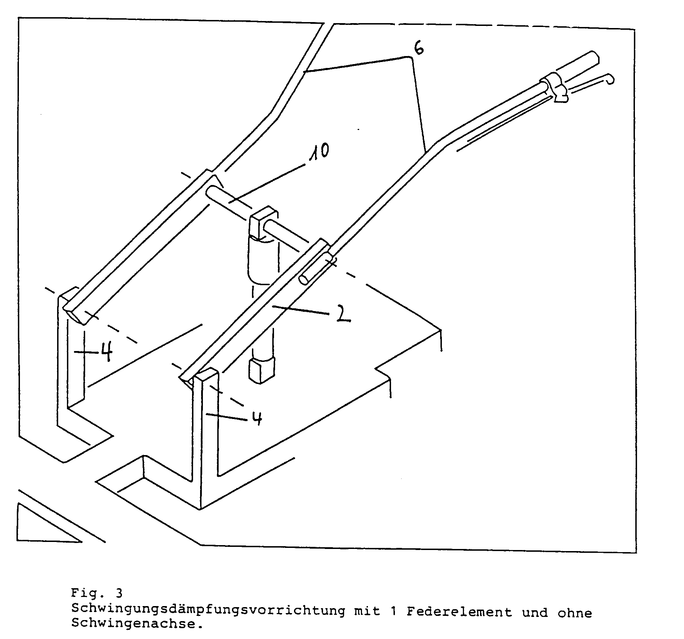

Figur 1 zeigt die Gesamtansicht einer Arbeitsmaschine am Beispiel eines Balkenmähers. Der Griffholm 6 ist hierbei in Form einer Schwinge 2 ausgebildet und über 2 Gelenke 3 mit Verbindungselementen 4 starr am Chassis befestigt. Der Griffholm 6 geht direkt in die Schwinge 2 über, er kann dabei mit dieser verbunden sein (Fig. 2, 3), oder wie Fig. 1 zeigt aus einem Stück bestehen. Damit die Stabilität des Schwingensystems gewahrt bleibt, ist zwischen den beiden Griffholmen 6 bzw. den Schwingen 2 ein Verbindungssteg 10 vorgesehen. Dieser Verbindungssteg 10 kann auch zur Befestigung eines Federelements 5 dienen.

Figur 2 zeigt eine erfindungsgemäße Ausgestaltungen, wobei wieder der Griffholm 6 als Schwinge 2 ausgebildet ist und diese Schwinge 2 über zwei Federelemente 5 abgestützt ist. Hier ist zudem eine Schwingenachse 7 angebracht. Auch hier ist ein Verbindungssteg 10 vorhanden, damit ein stabiles System entsteht. Mit dieser erfindungsgemäßen Ausgestaltung ist nun gewährleistet, daß die vertikalen Schwingungen durch die Federelemente abgefangen werden und zweitens die Schwinge 2 und das Gelenk 3 auf das Arbeitsgerät übertragen werden kann. Entscheidend ist hierbei, daß das Gelenk 3 nur einen ''Freiheitsgrad'' in einer Richtung, nämlich vertikal, hat, so daß die horizontalen Lenkkräfte auf das Gerät übertragen werden.

Figur 3 zeigt eine analoge Anordnung mit nur einem Federelement 5. In diesem Fall ist die Schwinge 2 als u-förmiger Körper ausgebildet. Die Federelemente 5 können dabei je nach den Gegebenheiten der Arbeitsmaschine an den dafür geeigneten Stellen befestigt werden.

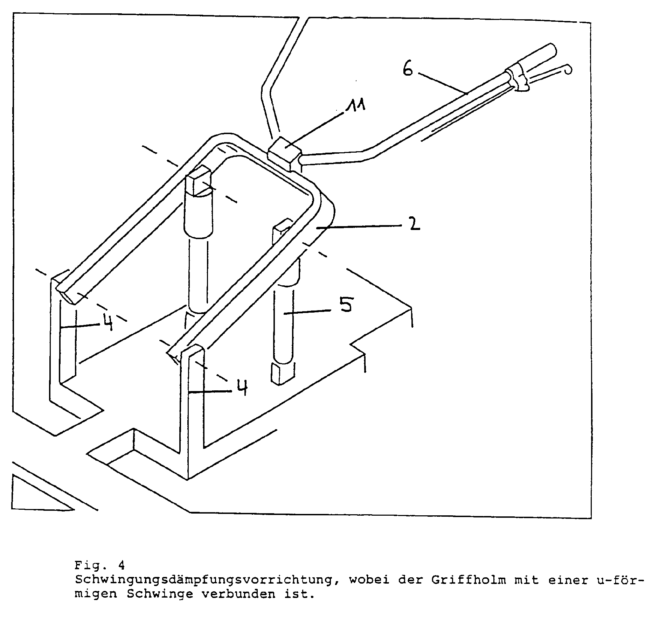

Figur 4 gibt ein Beispiel wieder, bei dem der Griffholm 6 mit einer Schwingenachse 2 verbunden ist und die Schwinge 2 wiederum über zwei Federelemente 5 abgestützt ist. Hierbei bildet also die Schwinge nicht selbst den Griffholm, sondern ist über eine Befestigungsvorrichtung 11 mit einer Schwinge 2 verbunden.

Figur 2 - 4 machen deutlich, daß mit den erfindungsgemäßen Merkmalen die verschiedensten Ausführungsformen realisiert werden können. Je nach Anforderung des Gerätes kann die entsprechende Vorrichtung ausgewählt werden.

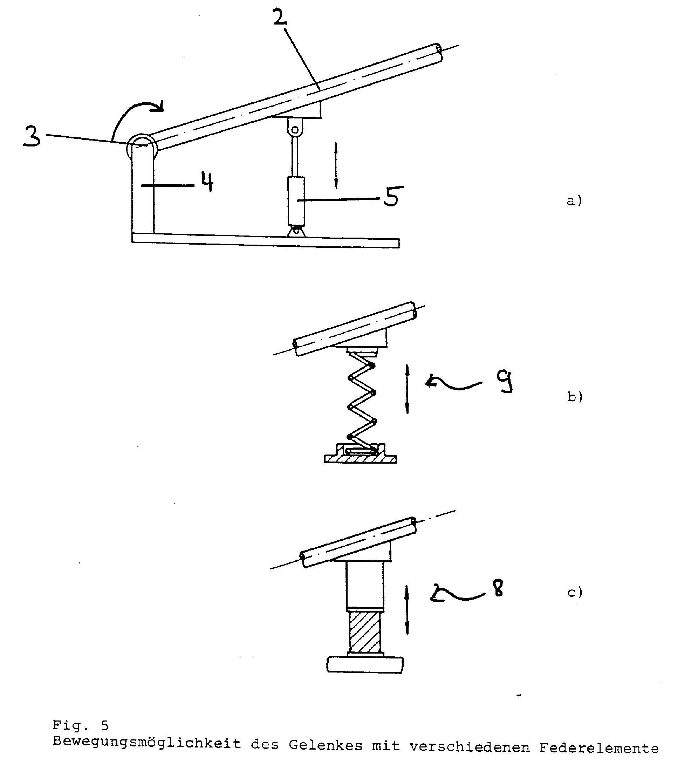

Figur 5 zeigt
a) die Verbindung der Schwinge 2 über das Gelenk 3 mit dem starren Verbindungselement 4 und in Teil
b) und c) jeweils zwei verschiedene Federelemente, nämlich eine Schraubenfeder 9 sowie eine Gasdruckfeder 8.

Figur 5a macht die vertikale Bewegungsmöglichkeit des Gelenkes 3 deutlich und die Verbindung mit dem Befestigungselement 4.

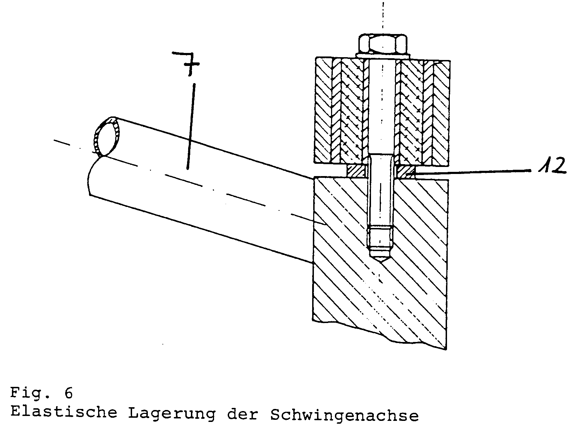

Figur 6 zeigt eine elastische Lagerung 12 der Schwingenachse 7.

Figur 7 zeigt die Meßergebnisse einer erfindungsgemäßen Schwingungsdämpfungsvorrichtung im Vergleich zu einer ungedämpften Arbeitsmaschine. Diese Graphik macht sehr eindeutig Klar, daß mit der erfindungsgemäßen Vorrichtung die vertikalen Schwingungen nahezu vollständig gedämpft werden. Hierin stellt die Kurve 2 das Meßergebnis für die ungedämpfte Vorrichtung und die Kurve 1 das Ergebnis für die erfindungsgemäße Lösung dar.

## Patentansprüche

1. Vorrichtung mit einem Arbeitsgerät und einer Schwingungsdämpfungsvorrichtung zur Dämpfung von an Griffholmen (6) eines handgeführten, einachsigen und von einem Verbrennungsmotor angetriebenen Arbeitsgerätes (1), wie beispielsweise eines Schleppers, Balkenmähers, Schneeräumers oder dgl., auftretenden vertikalen Schwingungen, welche Griffholme (6) aufweist die in Form einer Schwinge (2) ausgebildet oder mit einer Schwinge (2) verbunden sind, die über ein Gelenk (3) und ein Verbindungselement (4) am Arbeitsgerät (1) befestigt ist, und bei der die Schwinge (2) über mindestens ein Federelement (5) am Arbeitsgerät (1) abgestützt ist,
**dadurch gekennzeichnet,**
daß das Gelenk (3) derart angeordnet ist, daß dessen Gelenkachse in einer horizontalen Ebene und quer zur Arbeitsrichtung des Arbeitsgerätes (1) liegt.

2. Vorrichtung nach Anspruch 1,
**dadurch gekennzeichnet,**
daß die Schwinge (2) über zwei Gelenke (3) mit zwei Verbindungselementen (4) an Arbeitsgerät (1) befestigt ist und ein Befestigungssteg (10) zwischen den Schwingen (2) vorgesehen ist.

3. Vorrichtung nach Anspruch 2,
**dadurch gekennzeichnet,**
daß zwischen den Gelenken (3) eine Schwingenachse (7) angeordnet ist.

4. Vorrichtung nach Anspruch 3,
**dadurch gekennzeichnet**,
daß die Schwingenachse (7) über elastische Lager (12) mit der Schwinge (2) verbunden ist.

5. Vorrichtung nach Anspruch 1 bis 4,
**dadurch gekennzeichnet,**
daß als Federelemente (5) Gasdruckfederbeine (8) verwendet werden.

6. Vorrichtung nach Anspruch 1 bis 4,
**dadurch gekennzeichnet,**
daß als Federelemente (5) Gasdruckfederbeine (8) mit arretierbarer Mittelstellung verwendet werden.

7. Vorrichtung nach Anspruch 1 bis 4,
**dadurch gekennzeichnet,**
daß als Federelemente (5) Schraubenfederbeine (9) verwendet werden.

8. Vorrichtung nach Anspruch 1 bis 4,
**dadurch gekennzeichnet,**
daß als Federelemente (5) Schraubfederbeine (9) mit eingebautem oder separatem Dämpfer verwendet werden.

## Claims

1. Apparatus comprising an operating gear and a shock-absorbing device for absorbing vertical vibrations occurring on gripping bars (6) of a manually guided single-axis operating gear (1) driven by an internal combustion engine, such as a towing device, a beam-type mower, a snow-plough or the like, which comprises gripping bars (6) configured in the form of a lever (2) or connected to a lever (2), which lever is attached on said operating gear (1) through a joint (3) and a connecting element (4), and wherein said lever (2) is supported on said operating gear (1) via at least one resilient element (5),
**characterized in**
that said joint (3) is so arranged that its joint axis is located in a horizontal plane and transversely with respect to the operating direction of said operating gear (1).

2. Apparatus according to Claim 1,
**characterized in**
that said lever (2) is secured on said operating gear through two joints (3) by means of two connecting elements (4) and that a fastening web (10) is provided between said levers (2).

3. Apparatus according to Claim 2,
**characterized in**
that a lever axis (7) is disposed between said joints (3).

4. Apparatus according to Claim 3,
**characterized in**
that said lever axis (7) is connected to said lever (2) via resilient bearings (12).

5. Apparatus according to Claims 1 to 4,
**characterized in**
that gas-pressure struts (8) are used as resilient elements (5).

6. Apparatus according to Claims 1 to 4,
**characterized in**
that gas-pressure struts (8) with a lockable central position are used as resilient elements (5).

7. Apparatus according to Claims 1 to 4,
**characterized in**
that helical-spring struts (9) are used as resilient elements.

8. Apparatus according to Claims 1 to 4,
**characterized in**
that helical-spring struts (9) with built-in or separate shock absorber are used as resilient elements (5).

## Revendications

1. Appareil comprenant un outillage et un dispositif amortisseur de vibrations pour l'amortissement des vibrations présentes sur des manches (6) d'un outillage (1) uniaxe à guidage à la main et à commande par moteur à combustion interne, comme un tracteur, une moissonneuse à barre, un dispositif chasse-neige ou dispositif similaire, qui comprend des manches (6) configurés sous forme d'une manivelle oscillante ou reliés à une manivelle oscillante, ladite manivelle étant fixée audit outillage par un joint articulé (3) et un élément d'attache (4), et dans lequel ladite manivelle oscillante (2) s'appuie sur ledit outillage (1) moyennant au moins un élément ressort (5),
**caractérisé en ce**
que ledit joint articulé (3) est disposé de façon que son axe de joint se trouve dans un plan horizontal et transversalement au sens de travail dudit outillage (1).

2. Appareil selon la revendication 1,
**caractérisé en ce**
que ladite manivelle oscillante (2) est fixée sur ledit outillage par deux joints articulés (3) au moyen de deux éléments d'attache (4), et en ce qu'une traverse d'attache (10) est prévue entre lesdits manivelles (2).

3. Appareil selon la revendication 2,
**caractérisé en ce**
qu'un axe de manivelle (7) est disposé entre lesdits joints articulés (3).

4. Appareil selon la revendication 3,
**caractérisé en ce**
que ledit axe de manivelle (7) est attaché à ladite manivelle (2) par des logements élastiques (12).

5. Appareil selon les revendications 1 à 4,
**caractérisé en ce**
que des jambes de force à ressort sous pression de gaz (8) sont utilisées en tant que lesdits éléments élastiques (5).

6. Appareil selon les revendications 1 à 4,
**caractérisé en ce**
que des jambes de force à ressort sous pression de gaz (8) à position centrale arrêtable sont utilisées en tant que lesdits éléments élastiques (5).

7. Appareil selon les revendications 1 à 4,
**caractérisé en ce**
que des jambes de force à ressort à boudins (9) sont utilisées en tant que lesdits éléments elastiques (5).

8. Appareil selon les revendications 1 à 4,
**caractérisé en ce**
que des jambes de force à ressort à boudins (9) à dispositif amortisseur incorporé ou séparé sont utilisées en tant que lesdits éléments elastiques (5).
